# EUROPÄISCHE PATENTSCHRIFT

(11) **EP 1 231 430 B1**
(45) Veröffentlichungstag und Bekanntmachung des Hinweises auf die Patenterteilung: **28.03.2012**
(21) Anmeldenummer: 02100038.5
(22) Anmeldetag: 18.01.2002
(51) Int. Cl.: F21V 8/00

(54) **Beleuchtungseinrichtung mit punktförmigen Lichtquellen**
Illumination device with point light sources
Dispositif d'illumination avec sources de lumière ponctuelles

(30) Priorität: 20.01.2001 DE 10102586
(43) Veröffentlichungstag der Anmeldung: 14.08.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Greiner, Horst Dr. Philips Corp. Int. Prop. GmbH, 52066, Aachen (DE)
(74) Vertreter: Volmer, Georg

(56) Entgegenhaltungen:
- WO-A-90/13885
- DE-A- 19 903 587
- DE-A- 19 910 273
- DE-U- 29 707 964
- FR-A- 2 174 380
- JP-A- 04 338 723
- JP-A- 08 255 504
- JP-A- 10 082 915
- US-A- 3 077 535
- US-A- 4 998 804
- US-A- 5 876 107
- US-A- 6 007 209

## Beschreibung

Die Erfindung betrifft eine Beleuchtungseinrichtung, die eine Lichtaustrittsfläche sowie eine Mehrzahl von im wesentlichen punktförmigen Lichtquellen wie zum Beispiel LEDs umfasst, und die insbesondere zur Hinterleuchtung von Flüssigkristallanzeigen wie LCD-Bildschirmen oder zur Anwendung als flächiger Lichtstrahler geeignet ist.

LCD-Bildschirme erfordern bekanntlich zur Sichtbarmachung eines Bildes eine möglichst gleichmässige Hinterleuchtung ihrer gesamten Fläche. Insbesondere bei grossen Beleuchtungseinrichtungen besteht jedoch häufig die Schwierigkeit, dass eine hohe Lichtintensität nicht gleichmässig genug auf der gesamten Lichtaustrittsfläche, vor der der Bildschirm angeordnet wird, erzeugt werden kann. Dies kann zu störenden Bildeffekten führen. Weiterhin sollen diese Beleuchtungseinrichtungen in vielen Fällen eine möglichst geringe Bautiefe aufweisen.

Aus der DE-297 07 964 U1 ist zum Beispiel eine Beleuchtungseinrichtung bekannt, bei der eine Mehrzahl von Leuchtdioden auf einer Leiterplatte in einem Gehäuse angeordnet ist, dessen Lichtaustrittsfläche mit einer Diffusionsscheibe versehen ist. Die Leiterplatte ist mit einem Diffusreflektor beschichtet. Auf diese Weise soll eine gleichmäßige und intensive Lichtintensität auf der Lichtaustrittsfläche erzielt werden. Ein Nachteil dieser sogenannten direkten Hinterleuchtung besteht jedoch darin, dass zwischen den Leuchtdioden und der Diffusionsscheibe ein relativ grosser Abstand eingehalten werden muss, um eine gleichmässige Lichteteilung zu erzielen. Dies erfordert eine relativ grosse Bautiefe. Ein weiterer Nachteil ist dadurch bedingt, dass die beiden lichtstreuenden Schichten zu Verlusten führen, so dass die Effizienz von solchen Hinterleuchtungen (d. h der Anteil des von den Lichtquellen erzeugten Lichtes, das an der Lichtaustrittsfläche tatsächlich zur Verfügung steht) bei höchstens etwa 50 Prozent liegt.
US 3,077,535 beschreibt ein beleuchtetes Panel für die Anzeige von Buchstaben, Symbolen oder Pfeilen, wobei eine transparente Schicht von einer lichtundurchlässigen Schicht bedeckt ist, in die die entsprechenden Symbole eingebracht sind. In der transparenten Schicht sind Ausnehmungen angeordnet, in denen jeweils eine Leuchte eingebracht ist. Die Ausnehmungen weisen an ihrer Oberseite eine Lichtmaske auf, beispielsweise eine Metallscheibe. Die Seiten der Ausnehmungen sind als Lichtfilterbuchse ausgebildet.
Die JP08255504 und die JP04338723 beschreiben die Verwendung eines Reflektors an der Oberseite einer Ausnehmung für eine Lichtquelle in einer Lichtleiterplatte, um die Entstehung sogenannter "Hot Spots" zu vermeiden, da Licht nur über die Seitenwände der Ausnehmung in die Lichtleiterplatte gelangen kann.
Die Verwendung eines rückseitigen, von der Lichtleiterplatte durch einen Luftspalt beabstandeten Reflektor ist aus dem Stand der Technik ebenfalls bekannt (JP04338723, US4998804, US5876107).

Eine Aufgabe, die der Erfindung zugrunde liegt, besteht deshalb darin, eine Beleuchtungseinrichtung der eingangs genannten Art zu schaffen, die insbesondere zur Anwendung als Hinterleuchtung für grosse LCD-Bildschirme geeignet ist und bei geringer Bautiefe eine gleichmäßige und intensive Ausleuchtung des Bildschirms ermöglicht.

Gelöst wird diese Aufgabe gemäß Anspruch 1 mit einer Beleuchtungseinrichtung, die eine Lichtaustrittsfläche sowie eine Mehrzahl von im wesentlichen punktförmigen Lichtquellen umfasst und die gekennzeichnet ist durch eine Lichtleiterplatte, in die eine Mehrzahl von jeweils eine Lichtquelle enthaltende Ausnehmungen eingebracht ist, die jeweils eine der Lichtaustrittsfläche zugewandte Oberseite und Seitenwände aufweisen, wobei die Oberseite mit einer ersten reflektierenden Schicht bedeckt ist und die Lichteinkopplung in die Lichtleiterplatte durch die Seitenwände erfolgt.

Ein wesentlicher Vorteil dieser Lösung besteht darin, dass sich das Licht jeder einzelnen Lichtquelle nahezu homogen über die gesamte Lichtleiterplatte verteilt, jedoch nicht direkt von den Lichtquellen auf die Lichtaustrittsfläche auftreffen kann, so dass keine nennenswerte Abhängigkeit des ausgekoppelten Lichtes von den individuellen Eigenschaften der eingesetzten Lichtquellen wie zum Beispiel Schwankungen der Lichtintensität gegeben ist. Trotzdem steht durch die Art der Lichteinkopplung ein sehr hoher Anteil des von jeder Lichtquelle abgegebenen Lichtes an der Lichtaustrittsfläche zur Verfügung, so dass die Verluste gering und die Effizienz der Lichtquellen hoch ist, zumal keine Diffusionsscheiben erforderlich sind und auch die damit verbundenen Verluste nicht auftreten.

Es wird somit eine große Lichtintensität mit gleichmäßiger Verteilung erzeugt, wobei eine gewünschte Intensität durch eine entsprechende Wahl der Anzahl von Lichtquellen erzielt werden kann. Schließlich ist auch eine sehr flache Bauweise realisierbar.

Die Unteransprüche haben vorteilhafte Weiterbildungen der Erfindung zum Inhalt.

Mit den Ausführungen gemäß den Ansprüchen 2 und 6 bis acht wird eine besonders hohe Homogenität des Lichtes auf der Lichtaustrittsfläche erzielt, da kein Teil des von den Lichtquellen ausgehenden Lichtes direkt auf die Lichtaustrittsfläche gelangen kann.

Mit den Ausführungen gemäß dem Anspruch 1 wird die Effizienz der Lichtquellen weiter erhöht, während die Ausführungen gemäß den Ansprüchen 3 und 4 besonders einfach herstellbar sind.

Mit der Wahl der Lichtquellen gemäß Anspruch 5 kann eine sehr kostengünstige Beleuchtungseinrichtung mit geringem Gewicht hergestellt werden. Außerdem ist durch entsprechende Einstellung der Versorgungsspannung der Lichtquellen mit geringem Aufwand die Helligkeit des Lichtes an der Lichtaustrittsfläche einstellbar.

Weitere Einzelheiten, Merkmale und Vorteile der Erfindung ergeben sich aus der folgenden Beschreibung einer bevorzugten Ausrührungsform anhand der Zeichnung. Es zeigt:
Fig. 1 eine perspektivische Ansicht der bevorzugten Ausführungsform; und
Fig. 2 einen Querschnitt durch die Beleuchtungseinrichtung gemäß Figur 1.

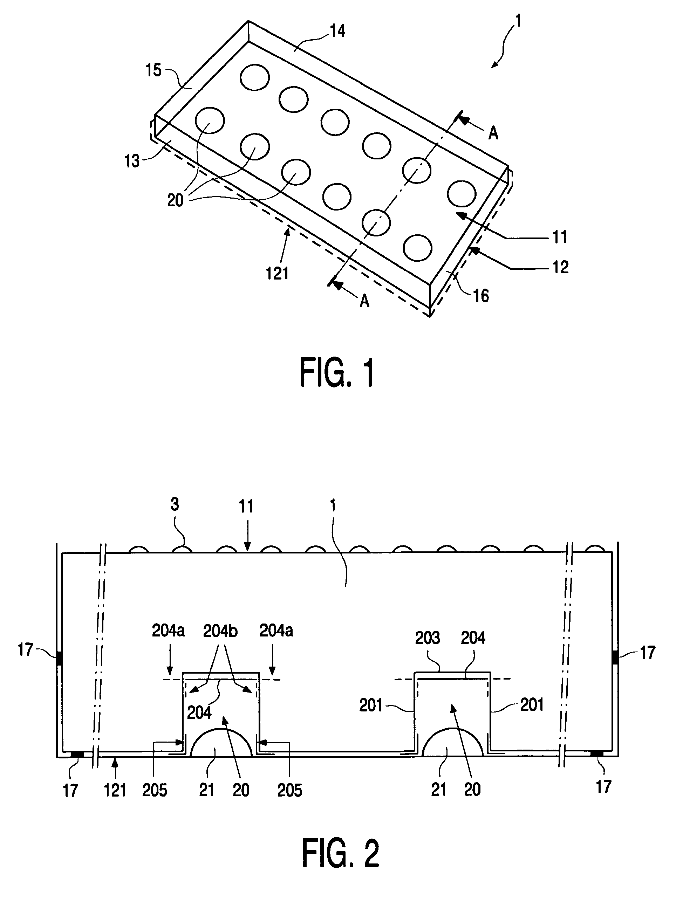

Figur 1 zeigt eine rechteckige Lichtleiterplatte 1, die aus einem lichttransparenten Material hergestellt ist. Die Platte umfasst an der Oberseite eine Lichtaustrittsfläche 11, aus der das Licht in bekannter Weise ausgekoppelt wird, eine dieser gegenüberliegende Unterseite 12, sowie zwei lange Seitenflächen 13, 14 und zwei kurze Seitenflächen 15, 16. In die Unterseite der Platte 1 sind eine Mehrzahl von sich in Richtung auf die Lichtaustrittsfläche 11 erstreckenden zylindrischen Ausnehmungen 20 (schematisch angedeutet) für Lichtquellen eingebracht.

Die Anzahl und der Abstand der zylindrischen Ausnehmungen ist im wesentlichen beliebig und kann in Abhängigkeit von der Größe der Beleuchtungseinrichtung der gewünschten Lichtstärke an der Lichtaustrittsfläche sowie der Art der Lichtquellen gewählt werden. Zur Erzielung einer gleichmäßigen Lichtverteilung sind die Ausnehmungen möglichst gleichmäßig über die Lichtleiterplatte 1 verteilt.

Die Lichtleiterplatte 1 und insbesondere deren Lichtaustrittsfläche 11 muss nicht unbedingt rechteckig sein. Vielmehr sind alternativ dazu auch andere Formen wie zum Beispiel quadratische, runde oder ovale Formen usw. möglich. Anstelle eines kreisförmigen Querschnitts der Ausnehmungen können auch andere Querschnitte gewählt werden, die zum Beispiel rechteckig oder polygonal sind.

Figur 2 zeigt einen Querschnitt durch die Lichtleiterplatte 1 im Bereich von zwei Ausnehmungen 20 gemäß der Linie A-A in Figur 1, die jeweils Seitenwände 201 und eine Oberseite 203 aufweisen. In jeder Ausnehmung befindet sich eine im wesentlichen punktförmige Lichtquelle 21, die zum Beispiel eine Leuchtdiode sein kann. Die Seitenwände 201, die im wesentlichen senkrecht zur Lichtaustrittsfläche 11 der Lichtleiterplatte 1 verlaufen, sind durch das Material der Lichtleiterplatte 1 gebildet, während die Oberseiten 203, die im wesentlichen parallel zu der Lichtaustrittsfläche 11 verlaufen, mit einer beidseitig hochreflektierenden ersten Schicht 204 versehen sind.

Hierbei bestehen zwei Möglichkeiten. Entweder ist die erste Schicht 204 direkt auf die Oberseite 203 der Ausnehmung 20 aufgebracht, so dass kein Spalt oder Zwischenraum zwischen der Lichtleiterplatte 1 und der ersten Schicht 204 vorhanden ist. Somit ist ein optischer Kontakt zwischen dieser Schicht und der Lichtleiterplatte 1 gegeben, wobei die Schicht möglichst spiegelnd reflektierend sein sollte. Alternativ dazu ist es auch möglich, die Schicht 204 von der Oberseite 203 der Ausnehmung in Richtung zu deren Innenraum zu beabstanden, so dass ein Spalt entsteht, wobei die Schicht zum Beispiel geringfügig in Richtung auf die lichtquelle konkav gekrümmt sein kann. In diesem Fall besteht kein optischer Kontakt zwischen der Schicht 204 und der Lichtleiterplatte 1, und das Licht aus der Platte 1 wird bereits an der Oberseite 203 der Ausnehmung bzw. der Übergangsfläche zwischen dem Material der Lichtleiterplatte und dem Spalt durch Totalreflektion in die Platte zurückreflektiert. Da diese Reflektion nur sehr geringe Verluste verursacht, wird im allgemeinen bevorzugt, die erste Schicht 204 von der Oberseite 203 zu beabstanden.

Die Unterseite der Ausnehmungen 20 ist schließlich durch eine hochreflektierende zweite Schicht 121 abgedeckt. Diese Schicht kann z B. auf eine Bodenwand sowie vorzugsweise die Innenwände eines die Lichtleiterplatte 1 umschließenden Gehäuses (nicht dargestellt) aufgebracht sein, so dass die zweite reflektierende Schicht 121 die ganze Unterseite 12 und auch die Seitenflächen 13 bis 16 bedeckt, so dass von außen kein optischer Kontakt zu den abgedeckten Flächen besteht.

An der lichtaustrittsfläche 11 befindet sich schließlich eine Mehrzahl von Extraktionselementen 3, mit denen das Licht in bekannter Weise aus der Lichtleiterplatte 1 ausgekoppelt wird.

Zur Montage der Beleuchtungsrenrichtung werden die Lichtquellen vorzugsweise an der Bodenwand eines Gehäuses befestigt. Anschließend wird die Lichtleiterplatte 1 mit den an den entsprechenden Stellen engebrachten Ausnehmungen 20 in das Gehäuse eingesetzt, so dass jede Lichtquelle 21 in jeweils einer Ausnehmung liegt. Weiterhin sind Abstandhalter 17 zwischen den Seitenflächen 13 bis 16 der Lichtleiterplatte und Innenwänden des Gehäuses sowie zwischen der Unterseite 12 der Lichtleiterplatte und der Bodenwand des Gehäuses vorgesehen, mit denen die zweite reflektierende Schicht 121 (an den Gehäuse-Innenwänden) von der Lichtleiterplatte beabstandet wird, so dass zwischen der Schicht 121 einerseits und den Seitenflächen 13 bis 16 bzw. der Unterseite 12 andererseits ein Luftspalt vorhanden bleibt.

Die von der mindestens einen Lichtquelle 21 ausgehenden Lichtstrahlen können in das Material der Lichtleiterplatte 1 nur durch die Seitenwände 201 der Ausnehmung 20 eindringen. Sie breiten sich in der Lichtleiterplatte 1 durch nahezu verdustfreie Totalreflektionen an den Seitenflächen 13 bis 16 sowie der Unterseite 12 der Lichtleiterplatte 1 bzw. der dort angeordneten zweiten Schicht 121 aus, bis sie an der Lichtaustrittsfläche 11 ausgekoppelt werden. Dies soll im folgenden im Detail beschrieben werden.

Trifft ein sich in der Lichtleiterplatte ausbreitender Lichtstrahl auf die Seitenwand 201 einer Ausnehmung 20, so dringt er in diese ein, wird innerhalb der Ausnehmung an der Lichtquelle 21 und /oder der hochreflektierenden ersten bzw. zweiten Schicht 204,121 gestreut und verlässt die Ausnehmung wieder durch die Seitenwand 201.

Sofern ein sich in der Lichtleiterplatte ausbreitender Lichtstrahl auf die äußere Oberseite 203 einer Ausnehmung trifft, wird er entsprechend den oben beschriebenen Alternativen entweder an der ersten Schicht 204 reflektiert, wenn diese in optischem Kontakt mit der Oberseite steht, oder er unterliegt einer Totalreflektion an der Oberseite 203, wenn kein optischer Kontakt zu der ersten Schicht 204 besteht, so dass der Lichtstrahl in beiden Fällen an der Ausnehmung 20 vorbeigeleitet wird.

Durch diese Art der Lichteinkopplung und Lichtausbreitung kommt es zu einer sehr homogenen Verteilung des Lichtes in der gesamten Lichtleiterplatte 1 und insbesondere zu einer sehr gleichmäßigen Verteilung der Beiträge der einzelnen Lichtquellen bzw. Leuchtdioden zu dem an der Lichtaustrittsfläche 11 ausgekoppelten Licht. Da sich das Licht jeder Lichtquelle über die gesamte Lichtleiterplatte verteilt, ist darüber hinaus der Einfluss einer einzelnen Lichtquelle durch zum Beispiel schwankende Intensität oder im Fehlerfall gering und tritt kaum in Erscheinung.

Diese Eigenschaften vertessern sich mit zunehmender Anzahl von Lichtquellen. Um eine möglichst hohe Anzahl von Lichtquellen pro Flächeneinheit der Lichtleiterplatte zu erhalten, bieten sich insbesondere Leuchtdioden an, die relativ klein und kostengünstig herstellbar sind. Gleichzeitig wird durch eine hohe Anzahl von Leuchtdioden natürlich auch eine entsprechend hohe Lichtintensität an der Lichtaustrittsfläche erzielt.

Das Licht kann in bekannter Weise mit den Extraktionselementen 3 an der Lichtaustrittsfläche 11 der Platte 1 ausgekoppelt werden, um zum Beispiel eine darauf angeordnete Flüssigkristallanzeige oder einen LCD-Bildschirm zu beleuchten. Durch geeignete Dimensionierung bzw. Anordnung der Extraktionselemente, die auch unregelmäßig sein kann, kann die Gleichmäßigkeit der Ausleuchtung weiter verbessert werden.

Die Lichtleiterplatte 1 befindet sich vorzugsweise in einem Gehäuse (nicht dargestellt) mit Wänden, die mit der zweiten Schicht 121 beschichtet sind und gemäß Figur 2 die Unterseite 12 sowie die Seitenflächen 13 bis 16 abdecken, so dass von außen kein optischer Kontakt zu den abgedeckten Flächen besteht. Die zweite Schicht 121 kann dabei spiegelnd oder diffus reflektierend sein.

Weiterhin besteht die Möglichkeit, die zweite Schicht 121 direkt auf der betreffenden Seitenfläche 13 bis 16 bzw. der Unterseite 12 anzuordnen, so dass die Abstandhalter 17 entfallen. Dies hat allerdings den Nachteil, dass insbesondere in dem Fall, in dem die zweite Schicht diffus reflektierend ist, ein Teil des auftreffenden Lichtes von den Seitenflächen direkt in Richtung auf die Lichtaustrittsfläche 11 reflektiert werden kann, was zu nachteiligen Effekten führen würde. Diese können zwar weitgehend vermieden werden, wenn die zweite Schicht spiegelnd reflektierend ist, solche Schichten sind jedoch wesentlich teurer, da sie mit einem vergleichbar hohen Reflektionsgrad nur mit großem Aufwand hergestellt und auf die Flächen der Lichtleiterplatte aufgebracht werden können.

Es hat sich überraschend gezeigt, dass dieses Problem gelöst werden kann, wenn die zweite Schicht 121 nicht direkt auf die betreffende Seitenfläche 13 bis 16 bzw. die Unterseite 12 aufgebracht wird, sondern einen Abstand von zum Beispiel 0,1 mm von der Lichtleiterplatte aufweist, so dass zwischen beiden aufgrund eines Luftspaltes kein optischer Kontakt besteht. Zu diesem Zweck sind die Abstandhalter 17 vorgesehen.

Tritt nun ein Lichtstrahl durch eine der Seitenflächen 13 bis 16 (oder die Unterseite 12) aus der Lichtleiterplatte 1 aus, so wird er zunächst an der Seitenfläche gebrochen, durchläuft dann den Luftspalt und wird von der vorzugsweise diffus reflektierenden zweiten Schicht 121 zurückreflektiert. Nachdem er den Luftspalt erneut durchlaufen hat, tritt er wieder in die Lichtleiterplatte 1 ein und erfüllt unter der Voraussetzung, dass der Brechungsindex der Platte nicht kleiner als 1,41 ist, weiterhin die Bedingung für die Totalreflektion.

Dadurch werden auch diejenigen Lichtanteile, die die Lichtleiterplatte durch die Seitenflächen oder die Unterseite verlassen, wieder in diese zurückreflektiert. Zur Erzeugung der zweiten Schicht 121 können weiße Folien oder weiße Farben verwendet werden, die mit Reflektionsgraden von über 95 bis 98 % allgemein erhältlich sind Es ist natürlich auch möglich, eine spiegelnd reflektierende zweite Schicht 121 zu verwenden. Allerdings hat eine diffus reflektierende Schicht den Vorteil, dass das Licht nach der Reflektion noch besser in der Lichtleiterplatte verteilt wird und dass diese Schicht mit höheren Reflektionsgraden und zu geringeren Kosten als eine spiegelnd reflektierende Schicht erzeugt werden kann.

Mit dieser Konfiguration ist somit eine sehr wirksame Einkopplung sowie eine gleichmäßige und weitgehend verlustfreie Verteilung des Lichtes einer großen Anzahl von Lichtquellen möglich.

Es hat sich ferner als vorteilhaft erwiesen, die hochreflektierende erste Schicht 204 an der Oberseite 203 der Ausnehmungen 20 entweder mit einem ersten Abschnitt 204a (in Figur 2 gestrichelt angedeutet) in horizontaler Richtung um einige Millimeter in die Lichtleiterplatte 1 fortzusetzen (zu diesem Zweck würde die Lichtleiterplatte aus zwei Schichten zusammengesetzt werden). Alternativ dazu (insbesondere wenn die Schicht durch Aufdampfen realisiert wird) kann die Schicht mit einem zweiten Abschnitt 204b (in Figur 2 gestrichelt angedeutet) in dazu senkrechter Richtung um die oberen Innenkanten der Ausnehmung und um einige Millimeter entlang der Seitenwände an diesen nach unten weitergeführt werden. Mit diesen Abschnitten wird jeweils vermieden, dass an den Kanten der Ausnehmung unerwünschtes Streulicht entsteht.

Zu diesem Zweck können weiterhin auch die an die gegenüberliegenden unteren Kanten der Ausnehmungen 20 angrenzenden Bereiche der Seitenwände 201 bzw. der Unterseite 12 der Lichtleiterplatte 1 mit einer hochreflektierenden dritten Schicht 205 versehen sein, die sich jeweils einige Millimeter entlang dieser Bereiche erstreckt.

Die beschriebenen Eigenschaften der erfindungsgemäßen Beleuchtungeinrichtung kann man sich in besonders vorteilhafter Weise auch dann zunutze machen, wenn das Licht von verschiedenfarbigen Lichtquellen, insbesondere Leuchtdioden, in der Lichtleiterplatte gemischt und als Mischfarbe an der Lichtaustrittsfläche abgegeben werden soll. Zur Erzeugung einer homogenen und gleichmäßigen Farbe des Mischlichtes werden die Lichtquellen vorzugsweise so angeordnet, dass benachbarte Lichtquellen stets Licht mit unterschiedlichen Farben abgeben.

Schließlich sei darauf hingewiesen, dass die Beabstandung der reflektierenden zweiten Schicht 121 von den Seitenflächen bzw. der Unterseite der Lichtleiterplatte unabhängig von der Art, Anzahl und Anordnung der Lichtquellen ist. Die Beabstandung kann zum Beispiel auch dann vorgenommen werden, wenn die Lichtquellen nicht in der Lichtleiterplatte sondern an einer oder mehreren ihrer Seitenflächen angeordnet sind. Auch in diesem Fall würden durch eine solche reflektierende und beabstandete Schicht an den übrigen Seitenflächen die oben beschriebenen Vorteile in Hinblick auf eine im wesentlichen verlustfreie und den Bedingungen für die Totalreflektion unterliegende Rückreflektion des durch die betreffende Seitenfläche ausgetretenen Lichtes erreicht werden.

## Patentansprüche

1. Beleuchtungseinrichtung zur Hintergrundbeleuchtung einer Flüssigkristallanzeige,
enthaltend:
- eine Lichtleiterplatte (1) mit einer Lichtaustrittsfläche (11),
- eine Mehrzahl von Ausnehmungen (20) in der Lichtleiterplatte (1) mit jeweils einer der Lichtaustrittsfläche (11) zugewandten Oberseite (203) und Seitenwänden (201),
- jeweils eine im wesentlichen punktförmige Lichtquelle (21) in den Ausnehmungen (20), wobei
die Ausnehmungen (20) an ihrer der Oberseite (203) gegenüberliegenden Unterseite mit einer ersten reflektierenden Schicht (121) bedeckt sind,
sich die erste reflektierende Schicht (121) über die Seitenflächen (13 bis 16) und die Unterseite (12) der Lichtleiterplatte (1) erstreckt,
die erste reflektierende Schicht (121) einen Luftspalt bildenden Abstand von der Lichtleiterplatte (1) aufweist, und
Abstandhalter (17) die erste reflektierende Schicht (121) von der Lichtleiterplatte (1) beabstanden,
**dadurch gekennzeichnet, dass** die Oberseite (203) mit einer zweiten reflektierenden Schicht (204) bedeckt ist und die Lichteinkopplung in die Lichtleiterplatte durch die Seitenwände erfolgt, und
dass die an den gegenüberliegenden unteren Kanten der Ausnehmungen (20) angrenzenden Bereiche der Seitenwände (201) beziehungsweise der Unterseite (12) mit einer dritten hochreflektierende Schicht (205) verstehen sind.

2. Beleuchtungseinrichtung nach Anspruch 1, **dadurch gekennzeichnet, dass** die Seitenwände (201) der Ausnehmungen (20) im wesentlichen senkrecht zu der Lichtaustrittsfläche (11) und die Oberseiten (203) der Ausnehmungen (20) im wesentlichen parallel zu der Lichtaustrittsfläche (11) verlaufen.

3. Beleuchtungseinrichtung nach Anspruch 1, **dadurch gekennzeichnet, dass** die Ausnehmungen (20) im wesentlichen zylindrisch sind.

4. Beleuchtungseinrichtung nach Anspruch 1, **dadurch gekennzeichnet, dass** die Ausnehmungen (20) in die Unterseite (12) der Lichtleiterplatte (1) eingebracht sind.

5. Beleuchtungseinrichtung nach Anspruch 1**dadurch gekennzeichnet, dass** Lichtquellen (21) Leuchtdioden sind.

6. Beleuchtungseinrichtung nach Anspruch 1, **dadurch gekennzeichnet, dass** sich die zweite reflektierende Schicht (204) mit einem ersten Abschnitt (204a) in horizontaler Richtung in die Lichtleiterplatte (1) fortsetzt.

7. Beleuchtungseinrichtung nach Anspruch 1, **dadurch gekennzeichnet, dass** sich die zweite reflektierende Schicht (204) mit einem zweiten Abschnitt (204b) entlang der Seitenwände (201) der Ausnehmung (20) fortsetzt.

8. Flüssigkristallanzeige mit einer Beleuchtungseinrichtung nach einem der vorhergehenden Ansprüche.

## Claims

1. Lighting mechanism for background lighting of a liquid crystal display, containing:
- light conductor plate (1) with a light-emitting surface (11),
- a multiplicity of recesses (20) in the light conductor plate (1), each with an upper surface (203) turned towards the light-emitting surface (11) and with side walls (201),
- in each case an essentially punctiform source of light (21) in the recesses (20), whereby
the recesses (20) at their lower surface, opposite the upper surface (203), are covered with a first reflecting layer (121),
the first reflecting layer (121) extending over the side surfaces (13 to 16) and the lower surface (12) of the light conductor plate (1),
the first reflecting layer (121) having an air gap that creates distance from the of the light conductor plate (1), and
a spacer (17) that separates the first reflecting layer (121) from the light conductor plate (1), **characterized in that** the upper surface (203) is covered with a second reflecting layer (204) and the light coupling takes place in the light conductor plate via the side walls, and
that the bordering areas of the side walls (201), or the lower surface (12), of the opposite lower edges of the recesses (20) are provided with a third highly reflecting layer (205).

2. Lighting mechanism according to claim 1, **characterized in that** the side walls (201) of the recesses (20) run essentially perpendicular to the light-emitting surface (11), and the upper surfaces (203) of the recesses (20) essentially parallel to the light-emitting surface (11).

3. Lighting mechanism according to claim 1, **characterized in that** the recesses (20) are essentially cylindrical.

4. Lighting mechanism according to claim 1, **characterized in that** the recesses (20) are placed on the lower surface (12) of the light conductor plate (1).

5. Lighting mechanism according to claim 1, **characterized in that** the sources of light (21) are light-emitting diodes.

6. Lighting mechanism according to claim 1, **characterized in that** the second reflecting layer (204) continues with a first section (204a) in horizontal direction in the light conductor plate (1).

7. Lighting mechanism according to claim 1, **characterized in that** the second reflecting layer (204) continues with a second section (204b) along the side walls (201) of the recess (20).

8. Liquid crystal display with a lighting mechanism according to one of the preceding claims.

## Revendications

1. Dispositif d'éclairage pour l'éclairage de fond d'un écran à cristaux liquides, comprenant :
- une plaque de guidage de lumière (1) dotée d'une surface de sortie de lumière (11),
- plusieurs évidements (20) dans la plaque de guidage de lumière (1) comprenant respectivement un côté supérieur (203) tourné vers la surface de sortie de lumière (11) et des parois latérales (201),
- respectivement une source de lumière sensiblement ponctuelle (21) dans les évidements (20),
les évidements (20) sur leur côté inférieur opposé au côté supérieur (203) étant recouverts d'une première couche réfléchissante (121),
la première couche réfléchissante (121) s'étendant au-dessus des surfaces latérales (13 à 16) et de la couche inférieure (12) de la plaque de guidage de lumière (1),
la première couche réfléchissante (121) comprenant un entrefer formant un écart par rapport à la plaque de guidage de lumière (1), et
des entretoises (17) tenant la première couche réfléchissante (121) à distance de la plaque de guidage de lumière (1), **caractérisé en ce que** le côté supérieur (203) est recouvert d'une seconde couche réfléchissante (204) et l'injection lumineuse dans la plaque de guidage de lumière s'effectue à travers les parois latérales, et
**en ce que** les zones des parois latérales (201) ou du côté inférieur (12) adjacentes aux arêtes inférieures opposées des évidements (20) sont pourvues d'une troisième couche hautement réfléchissante (205).

2. Dispositif d'éclairage selon la revendication 1, **caractérisé en ce que** les parois latérales (201) des évidements (20) s'étendent sensiblement perpendiculairement à la surface de sortie de lumière (11) et les côtés supérieurs (203) des évidements (20) s'étendent sensiblement parallèlement à la surface de sortie de lumière (11).

3. Dispositif d'éclairage selon la revendication 1, **caractérisé en ce que** les évidements (20) sont sensiblement cylindriques.

4. Dispositif d'éclairage selon la revendication 1, **caractérisé en ce que** les évidements (20) sont ménagés dans le côté inférieur (12) de la plaque de guidage de lumière (1).

5. Dispositif d'éclairage selon la revendication 1, **caractérisé en ce que** les sources de lumière (21) sont des diodes électroluminescentes.

6. Dispositif d'éclairage selon la revendication 1, **caractérisé en ce que** la deuxième couche réfléchissante (204) se poursuit avec une première partie (204a) dans le sens horizontal dans la plaque de guidage de lumière (1).

7. Dispositif d'éclairage de lumière selon la revendication 21, **caractérisé en ce que** la deuxième couche réfléchissante (204) se poursuit avec une seconde partie (204b) le long des parois latérales (201) de l'évidement (20).

8. Ecran à cristaux liquides comprenant un dispositif d'éclairage selon l'une quelconque des revendications précédentes.
